# EUROPEAN PATENT APPLICATION

(11) **EP 3 960 120 A1**
(43) Date of publication of application: **02.03.2022**
(21) Application number: 20193868.5
(22) Date of filing: 01.09.2020
(51) Int. Cl.: A61C 7/30, A61C 7/28, A61C 7/34

(54) **ORTHODONTIC BRACKET**

(71) Applicant: CeraMedical GmbH, 2444 Seibersdorf (AT)
(72) Inventor: HIRSCH, Markus, 8832 Wollerau (CH)
(74) Representative: Torggler & Hofmann Patentanwälte - Innsbruck

(57) **Abstract**

An orthodontic bracket (1) comprising at least one base (2) configured for attachment to a tooth surface and at least one bracket element (3) arranged at one side of the at least one base (2), the at least one bracket element (3) comprising
- at least one arch wire slot (4)
- two wall portions (6, 7)
wherein the orthodontic bracket (1) comprises at least one one-piece covering door (11) having at least one first free end (12) which is shaped to fit within at least one indentation (8) of a first wall portion (6), wherein the at least one indentation (8) comprises at least one locking elevation (13), wherein and the at least one covering door (11) comprises at least one locking deepening (14), and/or
- the at least one bracket element (3) and/or the at least one base (2) comprises, preferably consist of, composite material, particularly preferred polyurethane material, and/or
- the at least one covering door (11) comprises, preferably consist of, composite material, particularly preferred polyurethane material, and/or comprises, preferably consist of, ceramic material.

## Description

The present invention relates to an orthodontic bracket pursuant to the generic term of claim 1.

Customary orthodontic brackets as they are known from the prior art have the disadvantage that under high stress - exposed for example by the arch wire in treatments for malocclusions of high extent - the brackets tend to burst. Particularly in treatment procedures where a long usage of the brackets is necessary, the required life time is often not achieved in practice and the bracket is torn apart, deformed plastically or cracks appear within the brackets for instance.

Moreover, a fixation of the arch wire in the brackets is tedious and trained professional medical stuff is needed to locate and secure the arch wire within the bracket. Furthermore, locking mechanisms of customary orthodontic brackets have the disadvantage of an insecure occlusion of the arch wire slot and therefore, an undesired slipping of the arch wire outside the brackets is possible. High-precision brackets need complex geometries and are thus cost intensive and hard to manufacture.

Such an orthodontic bracket with a one-piece covering door according to the generic term of claim 1 is already know from the prior art document US 5,466,151 A, wherein the covering door slides along a surface of the bracket to occlude the arch wire slot in a closed position. In the closed position a spring secures the covering door against an undesired movement in direction of an open position.

A disadvantage of this bracket of the prior art is that once the bracket is present in a closed position, a movement of the covering door in direction of the open position is hard to manage, since the spring is not directly accessible and the occlusion prevent the covering door to unlock the covering door without a loss of fixation of the arch wire within the arch wire slot in a usual treatment. Moreover, if the spring carries a wrong spring force, is misaligned within the bracket and/or alters its form or spring force after multiple usages, a well-functioning bracket can no longer be ensured.

The objective technical object of the present invention is pursuant to a first aspect to provide an orthodontic bracket which is improved compared to the prior art, in which the disadvantages of the prior art are at least partially eliminated, and which is in particular distinguished by a secure locking mechanism that can user-friendly be opened or rather closed.

The objective technical object of the present invention is pursuant to a second aspect to provide an orthodontic bracket which is improved compared to the prior art, in which de disadvantages of the prior art are at least partially eliminated, an which is in particular distinguished by a high fracture resistance, in particular without a significant increase in the weight and/or manufacturing effort of the orthodontic bracket.

The object according to the first aspect is solved by the features of claim 1.

It is therefore provided that
- the at least one first free end is shaped to fit within the at least one indentation of the first wall portion, wherein
- the at least one indentation, preferably along a direction essentially parallel to at least one of the two wall portions, comprises at least one locking elevation , wherein
- the at least one covering door comprises at least one locking deepening, whereby the at least one covering door is securable to the orthodontic bracket by placing the at least one first free end into the at least one indentation and engaging the at least one locking deepening with the at least one locking elevation by elastic deformation of the at least one locking elevation, wherein the at least one covering door is held in the at least one indentation by positive-locking perpendicular to at least one of the two wall portions in a closed position and wherein the at least one covering door is releasable by elastic deformation of the at least one locking elevation by the at least one covering door to expose the at least one arch wire slot in an open position.

The at least one elastic deformable locking elevation makes a secure interlock between the at least one locking deepening of the at least one covering door and the at least one locking elevation possible by sliding the at least one covering door into the at least one indentation, wherein the interlock vanishes by removing the at least one covering door from the at least one indentation again by elastic deformation of the at least one locking elevation by the at least one covering door.

Hence, the orthodontic bracket is - in particular passive - self-ligating and/or reduces an effort to switch between the open position for arch wire removal or arch wire insertion and the closed position without a loss of security of the arch wire within the arch wire slot in the closed position.

The technical term "elastic deformation" is defined in this context as a flexibility with essentially no plastic deformation and no fracture so that the at least one locking elevation can be used repeatedly to open and close the orthodontic bracket by the at least one covering door.

The amount of locking elevation and/or locking deepening is in general arbitrary. Particularly preferred are at least two locking elevations and/or precisely one locking deepening. The positive locking of the interlock between the at least one locking elevation and the at least one locking deepening prevents the at least one covering door to slip outside the at least one indentation in the closed position.

It is preferably provided that the at least one covering door can be moved into the closed position by inserting the at least one covering door through the channel and place the at least one first free end into the at least one indentation, preferably wherein a second free end of the at least one covering door points in a direction of the supply side and/or is located within the channel.

By inserting the at least one free end of the at least one covering door straight or under consideration of possible curvatures of the components of the orthodontic bracket into the at least one indentation the at least one locking elevation can be elastically deformed till the closed position is achieved. In the closed position the locking elevation prevents a movement of the at least one covering door in the opposite direction. If needed, the at least one free end can elastically deform the at least one locking elevation again to enable a movement of the at least one covering door to the open position along the channel.

The at least one bracket element can be attached to one side of the at least one base.

The object according to the second aspect is solved by the features of claim 2.

It is therefore provided that
- the at least one bracket element and/or the at least one base comprises, preferably consists of, composite material, particularly preferred polyurethane material, and/or
- the at least one covering door comprises, preferably consists of, composite material, particularly preferred polyurethane material, and/or comprises, preferably consists of, ceramic material

If the at least one bracket element and/or the at least one covering door is built out of composite material, the weight of the orthodontic bracket can be reduced significantly, wherein particular advantageous elastic deformable bracket elements can be achieved by the use of polyurethane. Polyurethane can be used exclusively and/or additionally in a mixture in the composite material.

At least one covering door built out of ceramic material result in at least one covering door with particularly high fracture resistance, whereby the lifetime of the at least one covering door can be increased significantly even under high stress and/or frequent usage. Added to this is the positive property that the interlock between the at least one locking deepening and the at least one locking elevation is particular secure, since ceramic material is essentially not elastic deformable.

To allow elastic deformation, it is preferably provided that the at least one bracket body of the orthodontic bracket is made of a fully composite body or a composite body with a ceramic inlay, wherein composite can refer to a stain resistant, low water absorption polyurethane material for instance. The at least one covering door can be made of a composite or a ceramic material, wherein an advantage of polyurethane is a high degree of translucency with high strength and abrasion resistance.

With respect to both aspects advantageous embodiments of the present invention are defined in the dependent claims.

Although a passive self-ligating bracket is preferred, in some embodiments the bracket can be provided with auxiliary bracket tiewings for optional attachment of external ligation.

According to an advantageous embodiment of the present invention, it is provided that the at least one covering door has a second free end comprising at least one step to secure the at least one covering door in the open position, wherein the at least one bracket element comprises at least one, preferably elastic deformable, bridge extending upwards along the channel.

Upwards means in this context essentially perpendicular to an attachment plane of the orthodontic bracket on a tooth respectively perpendicular to the at least one base.

By means of the at least one step the at least one covering door can be moved from the closed position to a defined stop in the open position by the at least one step, wherein the at least one covering door stays in the open position without an undesired separation of the at least one covering door and the at least one bracket element.

It is advantageously provided that the at least one covering door is essentially plate-shaped and/or essentially rectangular in a cross section parallel to the at least one arch wire slot, preferably with a, particularly preferred cylindrical, dip and/or a concave shape facing in a direction of the at least one base.

With the help of the dip a movement of the at least one covering door is simplified, wherein a tool and/or a finger of a medical staff can engage with the dip and shift the at least one covering door in a direction perpendicular to the extension of the dip.

According to an favorable embodiment of the present invention, it is provided that the at least one bracket element comprises at least one inlay, wherein the at least one inlay consists of ceramic material and/or the at least one inlay is attached to the at least one arch wire slot or is located at least partially within the at least one bracket element so that an interior surface of the at least one inlay forms or strengthens at least partially the at least one arch wire slot.

The provision of at least one inlay made out of ceramic material can increase the fracture resistance of the at least one arch wire slot. As the at least one bracket element is preferably built out of composite material, the at least one inlay can strengthen at least zonally the at least one bracket element, wherein areas with high demands can be reinforced locally by the at least one inlay.

Moreover, an aesthetic appearance of the orthodontic element can be improved.

The at least one inlay makes it possible that ceramic material can be attached to the at least one arch wire slot and/or forms the at least one arch wire slot, wherein the at least one inlay is inserted into the at least one bracket element. The at least one inlay can in general be inserted into the at least one bracket element so that composite material covers the at least one inlay or the at least one inlay defines with the interior surface the at least one arch wire slot.

It is advantageous that the at least one inlay is essentially U-shaped, preferably wherein a first leg is longer than a second leg, wherein one leg, preferably the first leg, is arranged underneath the at least one locking elevation.

The U-shape can emulate a shape of the at least one arch wire slot, wherein the legs of the at least one inlay can reinforce the connection of the at least one covering door and the at least one bracket element in the closed position, wherein a possibly too high elastic deformation of the at least one locking elevation (where the secure interlock can possible be not maintained) can be prevented.

An advantageous variant is that the at least one covering door is self-ligating and prevents the at least one arch wire to move outside the at least one arch wire slot by an at least zonally, preferably complete, occlusion of the at least one arch wire slot.

The occlusion takes care of a sufficient confinement of the arch wire within the at least one arch wire slot.

In a favorable embodiment of the present invention it is provided that the at least one locking elevation is stationary, preferably firmly bonded, attached to the at least one indentation and/or, particularly preferred exclusively, elastic deformable by a, preferably essentially longitudinal, movement of the at least one covering door from the first wall portion along the at least one indentation.

The at least one locking elevation can therefore be deformed elastically by - apart from a possibly present curvature of the at least one covering door for instance - linear insertion of the at least one free end of the at least one covering door into the at least one indentation.

It is particularly preferred that the at least one covering door comprises at least one slide groove facing in a direction of the at least one base and at least one slide bar, wherein the at least one bracket element comprises at least one slide rail and preferably at least one bracket bar, wherein the at least one slide bar is movable along the at least one slide rail at least partially between the open position and the closed position, wherein the at least one bracket bar preferably secures the at least one slide bar against a separation of the at least one covering door and the at least one bracket element.

In general it is possible to coat, for example, the at least one slide bar and/or the at least one slide rail for an eased movability of the at least one covering door along the at least one bracket element. The at least one slide groove can prevent an unwished collision and/or rubbing of the at least one covering door with the at least one bracket element.

In one embodiment of the present invention it is provided that the at least one locking elevation has the form of at least one hump located in the at least one indentation, preferably upwards along a direction away from the at least one base, to secure the at least one covering door in the closed position by positive form locking perpendicular to at least one of the two wall portions.

It is preferably provided that the at least one locking deepening comprises at least two sides confining an angle, preferably a sharp angle. It is aprticularly preferred that the at least two sides meet in a rounding of the at least one locking deepening.

According to a preferred embodiment of the present invention it is provided that the at least one base and/or the at least one bracket element comprises at least one mechanical bonding means to securely interlock the orthodontic bracket with a tooth by bonding adhesive.

With the help of the at least one mechanical bonding means, a connection with a tooth by bonding adhesive can be improved, wherein undercuts around protrusions of the at least one mechanical bonding means can further enhance a conjunction with the bonding adhesive and/or the tooth. Chemical bonding modifiers within the bonding adhesive (that can be detrimental) are not necessary to exhibit this feature.

Possible material combinations of the bracket include:
- a fully composite body (i. e., base and/or bracket element)
- a composite body (i. e., base and/or bracket element) with ceramic liner
- composite or ceramic door

The term "composite" preferably refers to a stain resistant, low water absorption polyurethane material.

Further details and advantages of the present invention are explained in more detail below with reference to the description of the figures and with reference to the exemplary embodiments illustrated in the drawings. The figures show:
- Fig. 1a-1b: an orthodontic bracket according to a preferred embodiment, wherein an arch wire slot is occluded by a covering door in a closed position, in a perspective view and a rear view,
- Fig. 2a-2c: the orthodontic bracket pursuant to the embodiment according to Fig. 1a in a side view, a top view and a bottom view,
- Fig. 3a-3d: a bracket body of the orthodontic bracket pursuant to the embodiment according to Fig. 1a in a perspective view, a rear view, a top view and a side view,
- Fig. 4a-4b: an inlay for the orthodontic bracket pursuant to the embodiment according to Fig. 1a in a perspective view and a side view,
- Fig. 5a-5b: the covering door of the orthodontic bracket pursuant to the embodiment according to Fig. 1a in two perspective views,
- Fig. 6a-6c: the covering door pursuant to Fig. 1a in a rear view, a front view and a side view,
- Fig. 7a-7b: an orthodontic bracket according to a further preferred embodiment in a closed position of a covering door with an inlay forming an arch wire slot in a perspective sectional view and a sectional view from the side,
- Fig. 8: the orthodontic bracket pursuant to the embodiment according to Fig. 7a in an open position in a perspective sectional view.

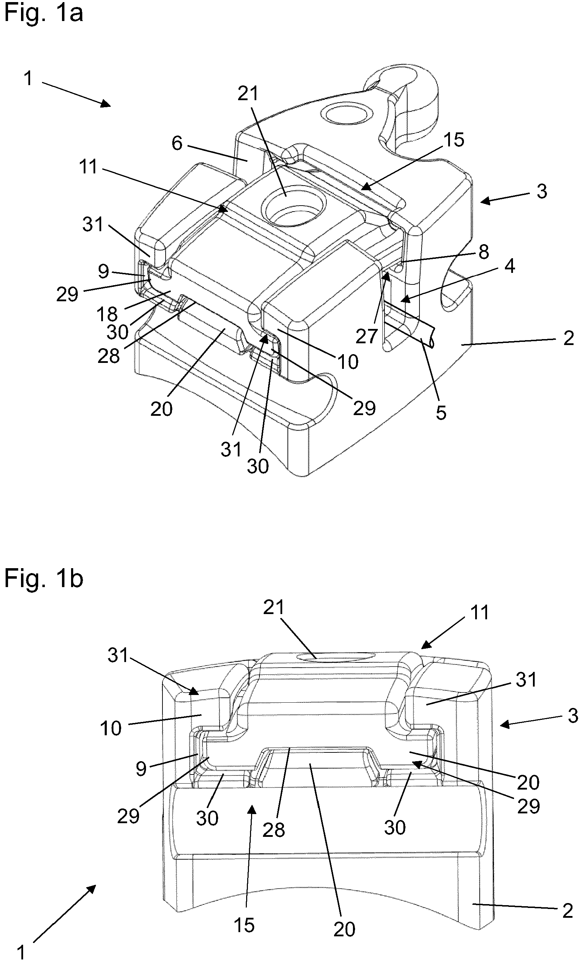

Fig. 1a discloses an orthodontic bracket 1 comprising a base 2 configured for attachment to a tooth surface and a bracket element 3 arranged at one side of the base 2. The base 2 and/or the bracket element 3 can in general be composed of separated parts.

The bracket element 3 comprises an arch wire slot 4 formed in a labial side of the bracket element 3 and running along a mesiodistal direction of the bracket element 3. The arch wire slot 4 is configured to receive an arch wire 5 therein.

Two wall portions 6, 7 of the bracket element 3 extend upward along both sides of the arch wire slot 4, wherein the first wall portion 6 has an indentation 8 essentially in a line parallel to the mesiodistal direction.

The orthodontic bracket 1 comprises a one-piece covering door 11 having a first free end 12, wherein the first free end 12 is shaped to fit within the indentation 8 of the first wall portion 6. It is in general also possible that the covering door 11 comprises more than one first free end 12 that fits in the indentation 8 or in indentations 8 or at least some of the first free ends 12 fit in the indentation 8 or in indentations 8.

The covering door 11 is self-ligating and prevents the arch wire 5 to move outside the arch wire slot 4 by occlusion 27 of the arch wire slot 4.

Fig. 1b discloses that the covering door 11 comprises a slide groove 28 facing in a direction of the base 2 and two slide bars 29, wherein the bracket element 3 comprises two slide rails 30 wherein the two slide bars 29 are movable along the two slide rails 30 between an open position 17 and the shown closed position 16.

The bracket element 3 comprises two bracket bars 31, wherein the two bracket bars 31 secure the at two slide bars 29 against a separation of the covering door 11 and the bracket element 3.

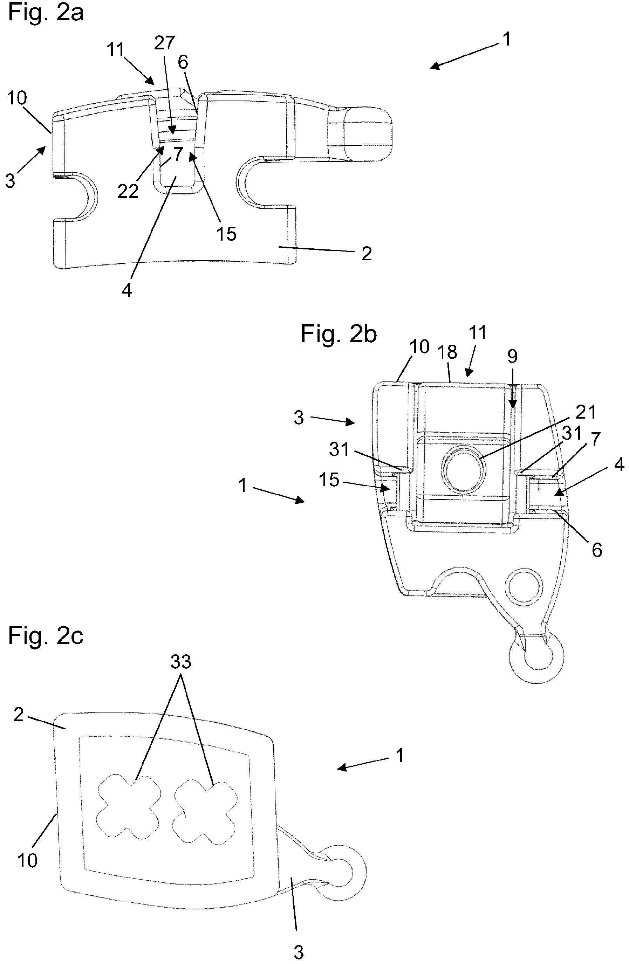

Fig. 2a distinguishes from Fig. 1b only by a different viewing direction rotated by 90 degrees to show the side view of the orthodontic bracket 1.

Fig. 2b discloses that the second wall portion 7 has a channel 9 running entirely through in direction to a supply side 10 of the bracket element 3 and in a gingival-occlusal direction of the orthodontic bracket 1.

Fig. 2c discloses the orthodontic bracket 1 from an attachment plane, wherein the base 2 comprises two mechanical bonding means 33 to securely interlock the orthodontic bracket 1 with a tooth by bonding adhesive.

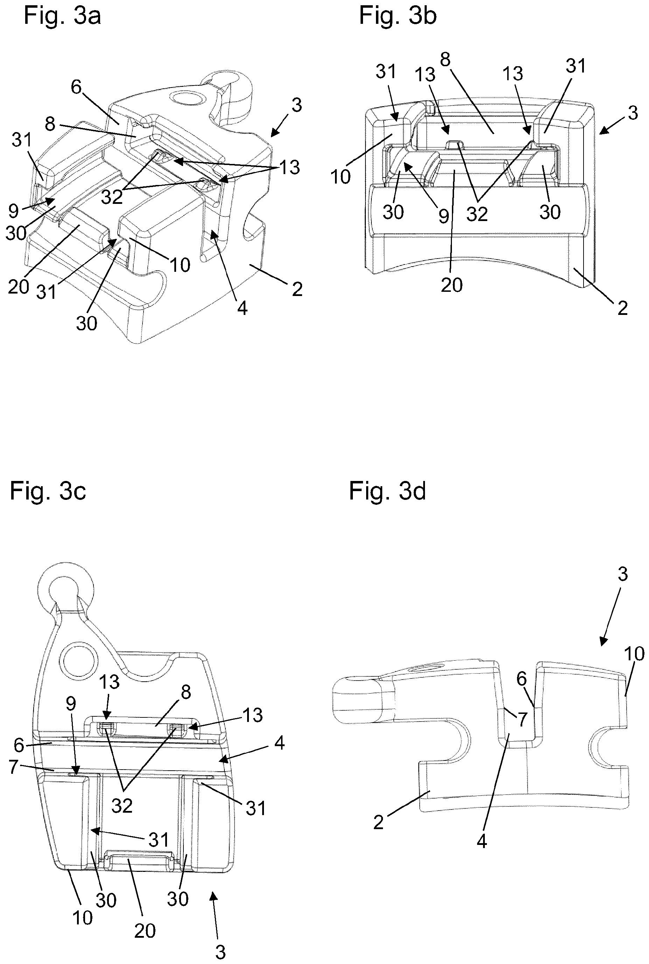

Fig. 3a to Fig. 3d disclose different views of the bracket element 3.

In Fig. 3a it is shown that two locking elevations 13 are located in the indentation 8 which have the form of humps 32 oriented upwards along a direction away from the base 2 to secure the covering door 11 in the closed position 18 by positive form locking 15 perpendicular to the two wall portions 6, 7.

Fig. 3b shows that in this embodiment the two slide rails 30 are convex to follow a concave geometry of the covering door 11. The channel 9 comprises a convex and a concave geometry, wherein the covering door 11 fits within the channel.

Fig. 3c shows the bracket element 3 with a knob facing away from the supply side 10 for an easier adjustment of the orthodontic bracket 1.

The bracket element 3 comprises an elastic deformable bridge 20 extending upwards along the channel 9.

Fig. 3d shows that the bracket element 3 comprises two notches which exhibit the same orientation as the arch wire slot 4.

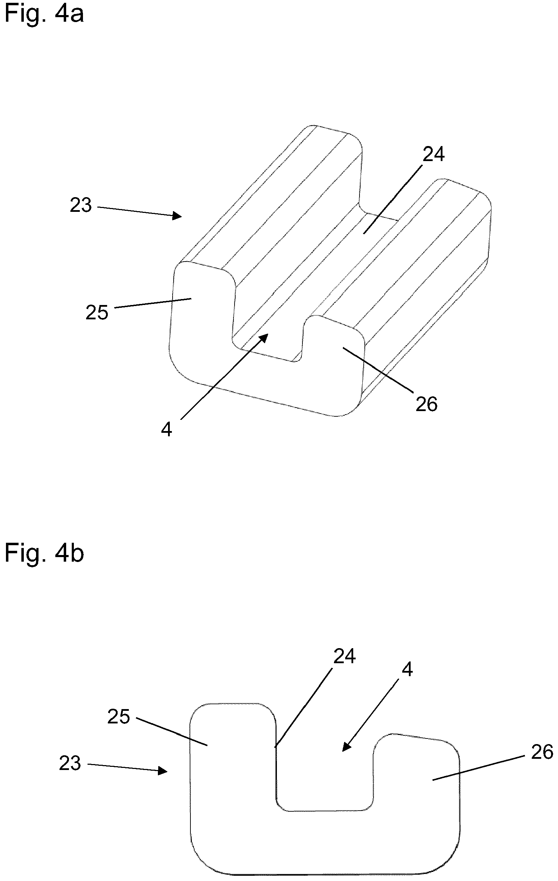

Fig. 4a discloses an inlay 23 which can be attached to the arch wire slot 4, can form the arch wire slot 4 or placed inside the bracket element 3 to strengthen the arch wire slot 4.

Fig. 4b discloses a U-shape of the inlay 23, wherein a first leg 25 is longer than a second leg 26, wherein the first leg 25 can be arranged underneath the locking elevation 13 as a structural reinforcement of the locking elevation 13 for instance.

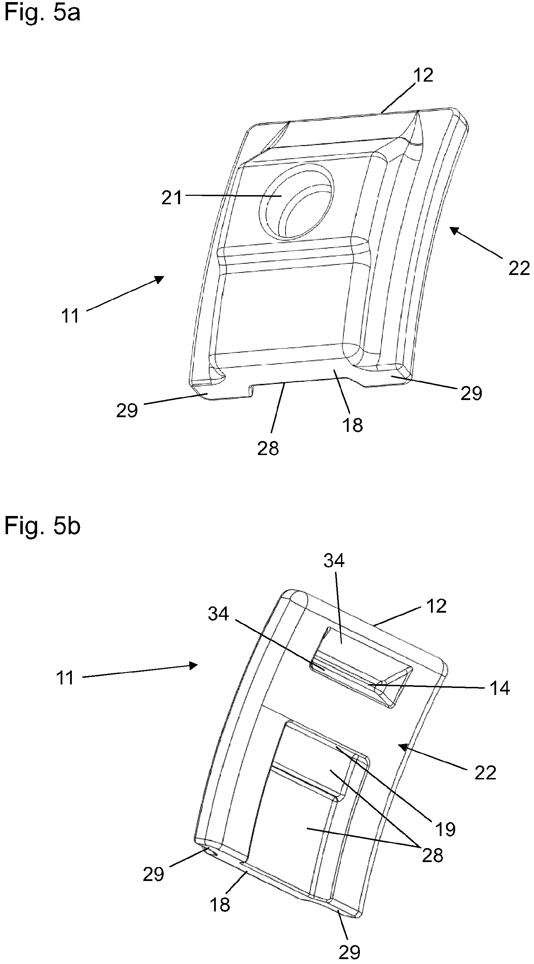

Fig. 5a discloses the covering door 11, wherein the covering door 11 comprises a second free end 18. The covering door 1 is rectangular in a cross section parallel to the wire slot 4 and comprises a cylindrical dip 21 as well as a concave shape 22 facing in a direction of the base 2.

Fig. 5b discloses the covering door 11, wherein the second free end 18 comprises a step 19 to secure the at least one covering door 11 in the open position 17.

The locking deepening 14 of the covering door 11 has two sides 34 which end in a rounding within the locking deepening 14, wherein the two sides 34 confine a sharp angle. In general, also a right angle or an obtuse angle is possible.

The locking elevations 13 comprise flanks for an easier insertion of the covering door 11 into the indentation 8, wherein the flanks can contact the two sides 34 planar. A linear or punctiform contacting is in general also possible.

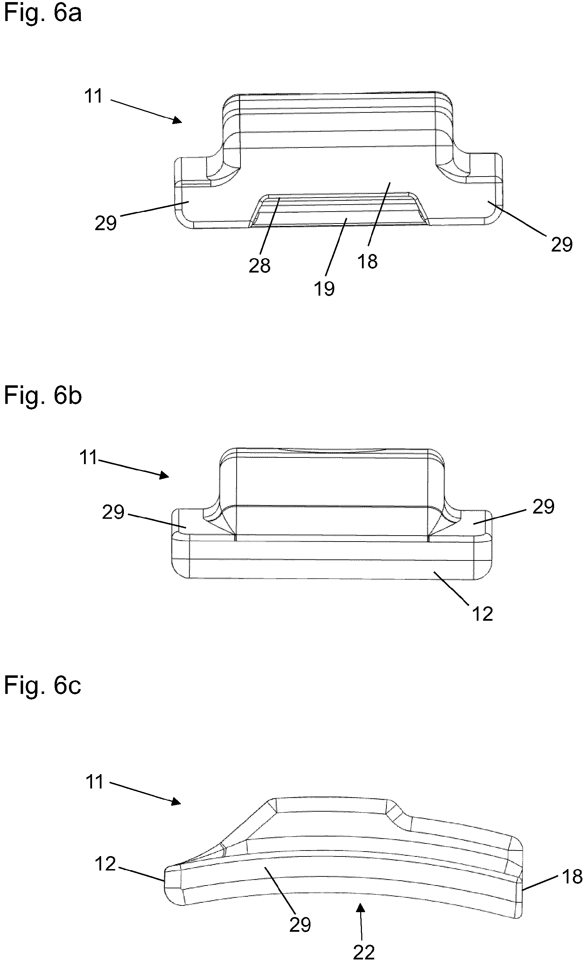

Fig. 6a and Fig. 6b show the covering door 11 of Fig. 5a and Fig. 5b in two different views.

Fig. 6c discloses that a concave curvature of the covering door 11 extends (apart from curves) from the first free end 12 to the second free end 18.

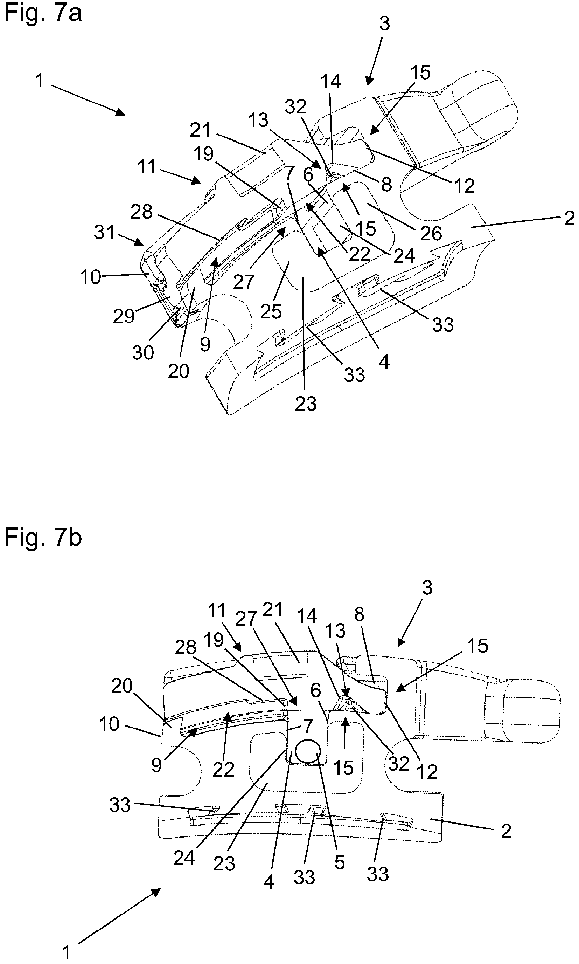

Fig. 7a discloses an orthodontic bracket 1, wherein the indentation 8 comprises two locking elevation 13 (the second locking elevation 13 is not visible due to the sectional view) in form of humps 32 in a direction parallel to the two wall portions 6, 7.

The covering door 11 comprises a locking deepening 14, whereby the covering door 11 is secured to the orthodontic bracket 1 by placing the first free end 12 into the indentation 8 and engaging the locking deepening 14 with the two locking elevations 13 by elastic deformation of the two locking elevations 13. The covering door 11 is held in the indentation 8 by positive-locking 15 perpendicular to the two wall portions 6, 7 in a closed position 16. The covering door 11 is releasable by elastic deformation of the two locking elevations 13 by the covering door 11 to expose the arch wire slot 4 in an open position 17.

The bracket element 3 comprises an inlay 23, wherein the inlay 23 consists of ceramic material and is located within the bracket element 3 so that an interior surface 24 of the at least one inlay 23 forms partially the arch wire slot 4.

Fig. 7b discloses the orthodontic bracket 1 with an arch wire inside the arch wire slot 4, wherein the bracket element 3 and the base 2 consist of composite material in the form of polyurethane material

The covering door 11 comprises ceramic material (or consists of ceramic material) and is located above the inlay 23. In general, the covering door 11 could also be built out of polyurethane material.

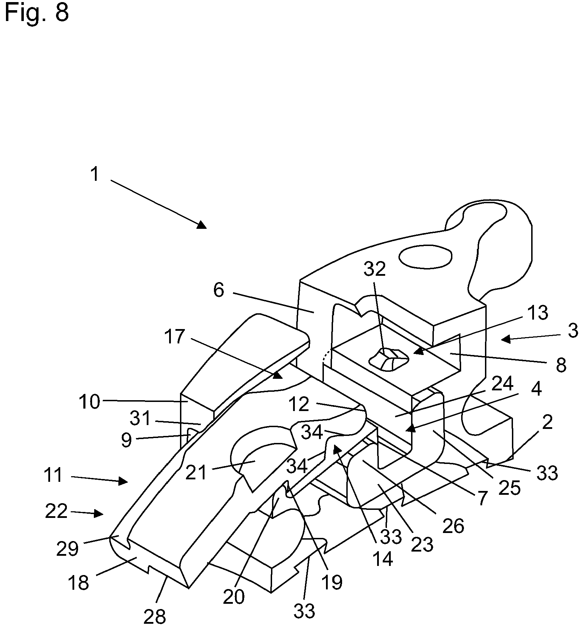

Fig. 8 discloses the orthodontic bracket 1 in the open position 17, wherein the step 19 of the covering door 11 contacts the bridge 20 of the bracket element 3 to expose the arch wire slot 4 completely.

In this position the orthodontic bracket 1 exhibits no occlusion of the arch wire slot 4 by the covering door 11. To get into the closed position 16 the covering door 11 can be moved along the channel 9 and into the indentation 8, wherein the bracket bars 31 secure the covering door 11 to the bracket element 3. As the covering door 11 is inserted into the indentation 8 the humps 32 are elastically deformed by the first free end 12 of the covering door and after a full insertion of the covering door, a positive form locking 15 between the locking deepening 14 and the locking elevations 13 is formed in the closed position 16.

The stationary locking elevations 13 that are firmly bonded attached to the indentation 8 are elastic deformable by an essentially longitudinal movement of the first free end 12 of the covering door 11 from the first wall portion 6 along the indentation 8.

The inlay 13 extends itself into the bracket element 3 respectively is embedded in the bracket element 3. By the ceramic material of the inlay 13 and the covering door 11 a secure locking of an arch wire 5 can be generated via the elastic deformable locking deepening 13 of the bracket element 3 which consists of polyurethane material. Hence, a solid and light orthodontic bracket 1 is present.

## Claims

1. An orthodontic bracket (1) comprising at least one base (2) configured for attachment to a tooth surface and at least one bracket element (3) arranged at one side of the at least one base (2), the at least one bracket element (3) comprising
- at least one arch wire slot (4) formed in a labial side of the at least one bracket element (3) and running along a mesiodistal direction of the at least one bracket element (3), said at least one arch wire slot (4) being configured for receiving at least one arch wire (5) therein, and
- two wall portions (6, 7) of the at least one bracket element (3) extending upward along both sides of the at least one arch wire slot (4), the first wall portion (6) having at least one indentation (8) essentially in a line parallel to the mesiodistal direction and the second wall portion (7) having a channel (9) running entirely through in direction to a supply side (10) of the at least one bracket element (3) and in a gingival-occlusal direction of the at least one orthodontic bracket (1),
wherein the orthodontic bracket (1) comprises at least one one-piece covering door (11) having at least one first free end (12), **characterized in that**
- the at least one first free end (12) is shaped to fit within the at least one indentation (8) of the first wall portion (6), wherein
- the at least one indentation (8), preferably along a direction essentially parallel to at least one of the two wall portions (6, 7), comprises at least one locking elevation (13), wherein
- the at least one covering door (11) comprises at least one locking deepening (14), whereby the at least one covering door (11) is securable to the orthodontic bracket (1) by placing the at least one first free end (12) into the at least one indentation (8) and engaging the at least one locking deepening (14) with the at least one locking elevation (13) by elastic deformation of the at least one locking elevation (13), wherein the at least one covering door (11) is held in the at least one indentation (8) by positive-locking (15) perpendicular to at least one of the two wall portions (6, 7) in a closed position (16) and wherein the at least one covering door (11) is releasable by elastic deformation of the at least one locking elevation (13) by the at least one covering door (11) to expose the at least one arch wire slot (4) in an open position (17).

2. The orthodontic bracket (1) according to the generic term of claim 1, preferably according to claim 1, wherein
- the at least one bracket element (3) and/or the at least one base (2) comprises, preferably consist of, composite material, particularly preferred polyurethane material, and/or
- the at least one covering door (11) comprises, preferably consist of, composite material, particularly preferred polyurethane material, and/or comprises, preferably consist of, ceramic material.

3. The orthodontic bracket (1) according to claim 1 or 2, wherein the at least one bracket element (3) comprises at least one inlay (23), wherein the at least one inlay (23) consists of ceramic material and/or the at least one inlay (23) is attached to the at least one arch wire slot (4) or is located at least partially within the at least one bracket element (3) so that an interior surface (24) of the at least one inlay (23) forms or strengthens at least partially the at least one arch wire slot (4).

4. The orthodontic bracket (1) according to claim 3, wherein the at least one inlay (23) is essentially U-shaped, preferably wherein a first leg (25) is longer than a second leg (26), wherein one leg (25, 26), preferably the first leg (25), is arranged underneath the at least one locking elevation (13).

5. The orthodontic bracket (1) according to one of the preceding claims, wherein the at least one covering door (11) has a second free end (18) comprising at least one step (19) to secure the at least one covering door (11) in the open position (17), wherein the at least one bracket element (3) comprises at least one, preferably elastic deformable, bridge (20) extending upwards along the channel (9).

6. The orthodontic bracket (1) according to one of the preceding claims, wherein the at least one covering door (11) is essentially plate-shaped and/or essentially rectangular in a cross section parallel to the at least one arch wire slot (4), preferably with a, particularly preferred cylindrical, dip (21) and/or a concave shape (22) facing in a direction of the at least one base (2).

7. The orthodontic bracket (1) according to one of the preceding claims, wherein the at least one covering door (11) is self-ligating and prevents the at least one arch wire (5) to move outside the at least one arch wire slot (4) by an at least zonally, preferably complete, occlusion (27) of the at least one arch wire slot (4).

8. The orthodontic bracket (1) according to one of the preceding claims, wherein the at least one locking elevation (13) is stationary, preferably firmly bonded, attached to the at least one indentation (8) and/or, particularly preferred exclusively, elastic deformable by a, preferably essentially longitudinal, movement of the at least one covering door (11) from the first wall portion (8) along the at least one indentation (8).

9. The orthodontic bracket (1) according to one of the preceding claims, wherein the at least one covering door (11) comprises at least one slide groove (28) facing in a direction of the at least one base (2) and at least one slide bar (29), wherein the at least one bracket element (3) comprises at least one slide rail (30) and preferably at least one bracket bar (31), wherein the at least one slide bar (29) is movable along the at least one slide rail (30) at least partially between the open position (17) and the closed position (16), wherein the at least one bracket bar (31) preferably secures the at least one slide bar (29) against a separation of the at least one covering door (11) and the at least one bracket element (3).

10. The orthodontic bracket (1) according to one of the preceding claims, wherein the at least one locking elevation (13) has the form of at least one hump (32) located in the at least one indentation (8), preferably upwards along a direction away from the at least one base (2), to secure the at least one covering door (11) in the closed position (18) by positive form locking (15) perpendicular to at least one of the two wall portions (6, 7).

11. The orthodontic bracket (1) according to one of the preceding claims, wherein the at least one locking deepening (14) comprises at least two sides (34) confining an angle, preferably a sharp angle.

12. The orthodontic bracket (1) according to one of the preceding claims, wherein the at least one base (2) and/or the at least one bracket element (3) comprises at least one mechanical bonding means (33) to securely interlock the orthodontic bracket (1) with a tooth by bonding adhesive.
